# EUROPEAN PATENT SPECIFICATION

(11) **EP 1 508 267 B1**
(45) Date of publication and mention of the grant of the patent: **20.01.2010**
(21) Application number: 04425627.9
(22) Date of filing: 11.08.2004
(51) Int. Cl.: A01D 34/90, A01D 34/416, A01B 1/06, A01G 3/053, A01G 3/06

(54) **Device for cutting vegetation or for other applications, with electric motor and reducing gear**
Vorrichtung zum Schneiden von Pflanzen mit einem Elektromotor sowie einem Drehzahlminderer
Appareil pour couper la végétation avec un moteur électrique et un engrenage réducteur

(30) Priority: 19.08.2003 IT FI20030222
(43) Date of publication of application: 23.02.2005
(73) Proprietor: Arnetoli, Fabrizio, 50066 Reggello (IT)
(72) Inventor: Arnetoli, Fabrizio, 50066 Reggello (IT)
(74) Representative: Mannucci, Michele

(56) References cited:
- EP-A- 1 179 291
- EP-A- 1 327 502
- WO-A-2004/054348
- GB-A- 765 476
- GB-A- 1 008 015
- GB-A- 2 207 592
- US-A- 4 286 675
- US-A- 4 469 184
- US-A- 5 010 720
- US-A1- 2002 121 022

## Description

### Technical Field

The present invention relates to a device for cutting vegetation or the like, for example a brush cutter, a hedge trimmer or another device for use in the gardening sector or the like, such as a motor hoe, a leaf blower or vacuum, a snow shovel, etc.. More specifically, the invention relates to a device operated by an electric motor, to operate a tool or utensil carried at the end of a tube.

### State of the art

To cut vegetation, in particular to cut grass, to trim the edges of flowerbeds or the like, to cut bushes or for other cutting operations that do not require high powers, in addition to brush cutters with internal combustion engines, brush cutters operated by an electric motor are also currently used. These brush cutters typically have a tube carrying at one end a hub for connection of a cutting member and a second end, with which an electric motor is associated. The tube is usually provided with a handle to hold the brush cutter and guide the end of the tube carrying the cutting member. This cutting member is typically composed of a string trimming head, that is a rotating head from which one or more cutting strings project, which act on the vegetation to cut or tear it when the head is carried in rotation at high speed by the motor of the brush cutter. Drive is transmitted along the tube, which is hollow, by a transmission member, usually composed of a flexible shaft or the like.

In traditional devices the transmission member is connected directly to the output shaft of the electric motor without reducing the number or revolutions. The rotation speed of these motors is particularly high and this arrangement does not allow high torques to be obtained on the cutting member. Therefore, brush cutters of this type cannot cut vegetation with high cutting resistance.

Analogous problems are found in the use of different tools or utensils, such as motor hoes or the like.

A device according to the preamble of claim 1 is disclosed in GB-A-765,476.

### Objects and summary of the invention

The object of the present invention is to produce a device of the type mentioned above for operation of a tool or utensil, in particular of the type operated with an electric motor, which overcomes some of the drawbacks of traditional devices.

According to the invention, a novel device is provided, including the features of claim 1. The dependent claims refer to preferred embodiments of the device.

It is therefore possible to produce a brush cutter or the like with moderate overall dimensions and a particularly ergonomic shape, in which a speed reduction gear is also provided. This allows the use of an electric motor with a high number or revolutions to cut vegetation that requires higher cutting torques with respect to those available at the output of brush cutters, in which the drive of the electric motor transmits movement, without reduction of speed, directly to the hub to which the cutting member is connected.

Further advantageous characteristics and embodiments of the device according to the invention are indicated in the appended claims.

In particular, the tube supporting the shell inside which the motor is housed and positioned at the free end of which is the hub to which the cutting member is connected can have an axial extension more or less equal to the extension of the transmission member and, therefore, also extending at the side of the motor. In this way a stronger and more rigid construction is obtained, as coupling between the shell housing the electric motor and the handling tube is improved.

The device has a supporting housing for the driven shaft of the reduction gear. A seat for housing and interference fitting of the end of the tube facing the motor can be produced in this housing. This allows a particularly compact and rigid construction to be obtained. The housing can be produced in one piece with the shell or can be composed of a separate element that is fixed in the shell housing the motor. According to a preferred embodiment of the invention, the housing of the driven shaft of the reduction gear is produced in one piece with a support of the motor, for example a support that - by means of brackets or arms - is fastened to the electric motor and subsequently interference fitted in the shell and held therein after closing of said shell. The shell is normally composed of two symmetrical or approximately symmetrical half-shells that are produced by molding and coupled using screws, rivets or the like.

### Brief description of the drawings

The invention shall now be better understood by following the description and accompanying drawing, which shows a non-limiting practical embodiment of the device according to the invention. More specifically:
Figure 1 shows a perspective view of the device as a whole;
Figure 2 shows an external view of the shell housing the motor and of the reduction gear;
Figure 3 shows an open view of the shell with the components housed therein; and
Figure 4 shows a longitudinal section of the support of the motor and the housing of the bearings for supporting the driven shaft of the reduction gear and for fixing the end of the tube.

### Detailed description of the preferred embodiment of the invention

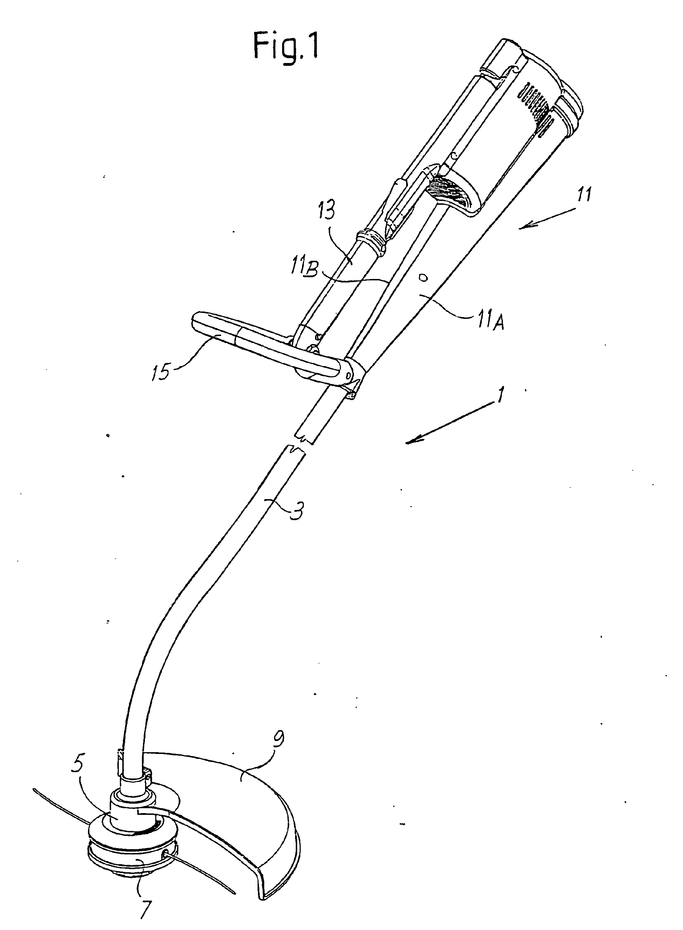

Figure 1 shows the device as a whole and indicated therein with 1. It comprises a tube 3, provided at a first end of which is a hub 5 to which a cutting head 7, in the example shown an string head, is torsionally coupled. A protection element is indicated with 9. It must be understood that the cutting member may also be composed of a different tool, such as a pair of rotating blades. Alternatively, the tool applied to the end of the tube may also be destined for different functions, as mentioned above.

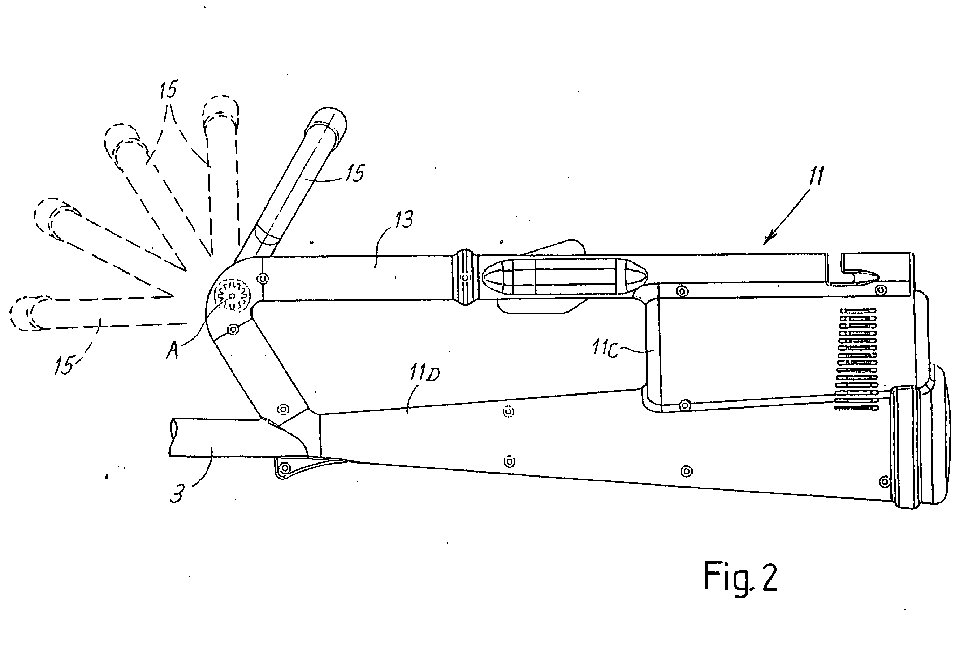

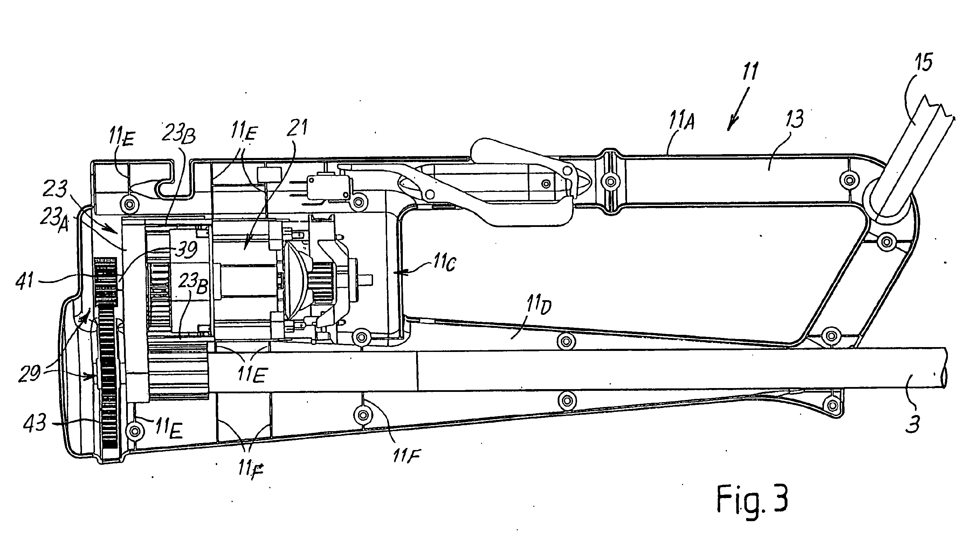

Associated with the opposite end of the tube 3 is a unit 11 comprising a shell, inside which an electric motor is housed. The assembly 11 is shown in greater detail in the external view and open view of the shell in Figures 2 and 3.

The shell of the unit 11 is composed by two essentially symmetrical half-shells in molded plastic or the like, indicated with 11A and 11B, connected to each other by means of screws. The half-shells forming the shell of the unit 11 also form a handgrip 13, coupled to which, about an axis A, is a handle 15, the inclination of which is adjustable as shown in Figure 2. The device is held and handled by the operator by means of the handgrip 13 and the handle 15.

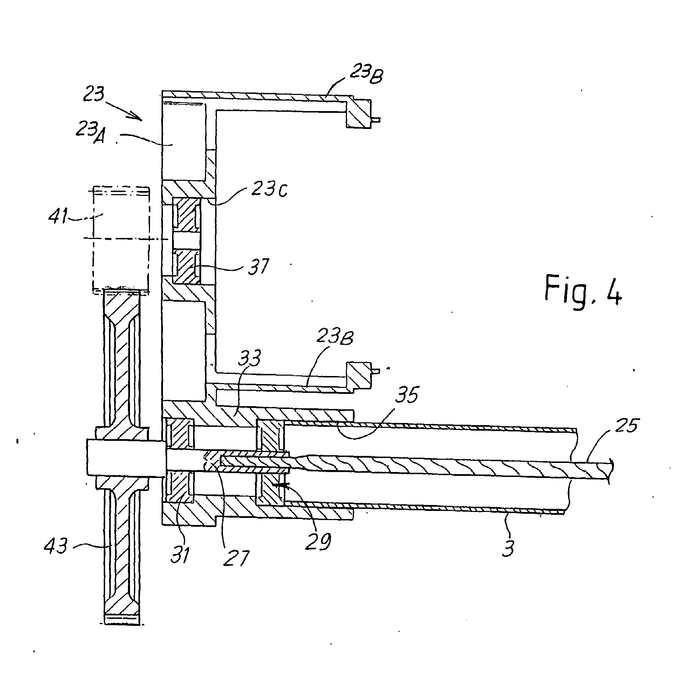

As can be seen in particular in Figure 3, an electric motor 21 is housed inside the shell formed of the half-shells 11A, 11B. This motor is connected to a support 23 shown separately in Figure 4. The support 23 has a base 23A, extending from which are two brackets 23B, which, by means of screws and in a per se known way, engage with the motor 21.

The assembly constituted by the support 23 and by the motor 21 clamped thereon is inserted into a central body 11C formed by the half-shells 11A and 11B which form the shell housing the motor. Extending from this central body 11C are the handgrip 13 and a hollow portion 11D, approximately parallel to the principal part of the handgrip 13, inside which the end portion of the tube 3 engages and through which it extends.

The two shells 11A, 11B have variously distributed ribs 11E that hold the support 23 and the motor 21 in place. Further ribs 11F in the two half-shells 11A and 11B engage the portion of the tube 3 that extends inside the portion 11D of shell. As can be seen in Figure 3 the tube 3 is thereby fixed for a considerable length inside the shell of the unit 11 and extends at the side of the motor 21 towards the rear area of said motor and of the unit 11, that is, towards the opposite end to the hub 5 and to the head 7.

Extending inside the tube 3 is a transmission member in the form of a flexible or rigid shaft 25 (see Figure 4). One end (not shown) of the transmission member 25 is connected in a per se known way to the hub 5 to transmit rotatory motion thereto, while the opposite end is engaged torsionally with a driven shaft 27 of a reduction gear 29 interposed between the motor 21 and the transmission member 25.

The driven shaft 27 is supported by bearings 29 and 31 inside a housing 33 inside which a seat 35 is also machined, into which the end of the hollow tube 3 is fixed. The housing 33 is produced in one piece with the support 23 of the motor, for example in molded plastic, aluminum or another suitable material. However, this housing 33 may also be produced in a different way, for example in one piece with the shell or as a separate element which is fixed inside the half-shells 11A, 11B forming the shell to house the motor by means of providing suitable tabs or ribbing analogous to those 11E, 11F.

Nonetheless, production in one piece with the support 23 allows a series of advantages. Firstly, production and assembly is simplified. Moreover, production in one piece allows greater assembly precision.

In fact, the base 23A of the support 23 is also provided with a seat 23C for a support 37 of the drive shaft 39 of the motor 21. As can be seen in Figure 3, the shaft 39 projects from the rear of the motor casing, that is, on the opposite side with respect to the position in which the cutting head 7 is positioned. The shaft 39 passes through the seat 23C in which the support 37 is housed and keyed thereon is a first gear wheel 41 which meshes with a second gear wheel 43, keyed on the driven shaft 27. The pair of gear wheels 41, 43 forms the reduction gear interposed between the motor 21 and the transmission member 25. Positioning the bearings of the two shaft in seats produced in a single support makes assembly easier and more precise.

The reduction gear could also be formed by a pair of pulleys driving a belt, if need be toothed.

As can be seen clearly in Figure 3, both the transmission member 25 and the tube 3 extend inside the shell formed by the half-shells 11A, 11B of the unit 11 approximately parallel to the motor 21, that is, at the side thereof, reaching the rear area of said motor. The reduction gear is positioned in the rear area of the unit 11, that is, in the furthermost area with respect to the end of the tube 3 carrying the cutting member 7. This layout makes the device compact and ergonomic, and also guarantees rigidity and smaller overall dimensions of the entire system.

In the arrangement shown the tube 3 extends inside the shell formed by the half-shells 11A, 11B to become fixed in the seat 35 formed by the housing 33. However, the tube 3 may also extend to a lesser extent with respect to the transmission member 25 and terminate in an intermediate position along the hollow portion 11D. An arrangement of this type would, nonetheless, provide fewer advantages in terms of rigidity and strength.

It is understood that the drawing purely shows an example, provided only as a practical embodiment of the invention, which may vary in forms and layouts without however departing from the scope of the concept underlying the invention, as set out in the claims. Any reference numerals in the appended claims are provided purely for the purpose of facilitating reading of the claims with reference to the description and to the drawing, and do not limit the scope of protection whatsoever.

## Claims

1. A device to operate a utensil, comprising: a unit (11) with a motor (21) having a drive shaft (39); a hollow supporting tube (3), with a first end connected to said unit (11) and a second end, associated with which is a connection means for said utensil (7); a transmission member (25) extending along said tube (3) towards said connection means; wherein said drive shaft (39) is facing the opposite side with respect to said second end of the tube (3); wherein a reduction gear (41, 43) is disposed between said drive shaft (39) and the transmission member (25); wherein said transmission member extends at the side of the motor (21); **characterized in that**: said motor is an electric motor; a driven shaft (27) of said reduction gear (41, 43) is supported in a housing (33) fixed in a shell (11A, 11B) forming a central body (11 C), in which said motor (21) is housed, extending from which is a hollow portion (11 D), which retains said tube (3) at the side of said motor; and a handgrip (13) formed by said shell (11A, 11B) extends from said central body (11C) and connects to said hollow portion (11D).

2. Device as claimed in claim 1, **characterized in that** a handle (15) is connected to said handgrip (13).

3. Device as claimed in claim 2, **characterized in that** said handle has an angular position that is adjustable with respect to said handgrip.

4. Device as claimed in claim 1 or 2 or 3, **characterized in that** the tube (3) extends at the side of the motor.

5. Device as claimed in any one of the preceding claims, **characterized in that** said housing (33) has a seat (35) to receive the first end of the tube (3).

6. Device as claimed in any one of the preceding claims, **characterized in that** said housing is produced in one piece with a support (23) connected to said motor (21).

7. Device as claimed in claim 6, **characterized in that** said support (23) and/or said motor are interference fitted into said shell (11A, 11B) containing the motor (21).

8. Device as claimed in claim 6 or 7, **characterized in that** said support has a through hole (23C) for the drive shaft (39).

9. Device as claimed in claim 6, 7 or 8, **characterized in that** said support (23) has brackets (23B) to engage the motor, extending from a base (23A) with which said housing (33) is integral.

10. Device as claimed in any one of the preceding claims, **characterized in that** said shell (11A, 11B) has ribbing (11E) that holds said housing (33) in place.

11. Device as claimed in any one of the preceding claims, **characterized in that** said shell (11A, 11B) has ribbing (11F) that engages said tube (3) in a position at the side of said motor (21).

## Patentansprüche

1. Vorrichtung zum Bedienen eines Werkzeugs, umfassend: eine Einheit (11) mit einem Motor (21), der eine Antriebswelle (39) aufweist; ein hohles Tragrohr (3) mit einem ersten Ende, das mit der Einheit (11) verbunden ist, und einem zweiten Ende, mit dem ein Anschlussmittel für das Werkzeug (7) verbunden ist; ein Übertragungsorgan (25), das sich entlang dem Rohr (3) zu dem Anschlussmittel hin erstreckt, wobei die Antriebswelle (39) an der in Bezug auf das zweite Ende des Rohrs (3) gegenüberliegenden Seite angeordnet ist; wobei ein Drehzahlminderer (41, 43) zwischen der Antriebswelle (39) und dem Übertragungsorgan (25) vorgesehen ist; wobei sich das Übertragungsorgan auf der Seite des Motors (21) erstreckt, **dadurch gekennzeichnet, dass** der Motor ein Elektromotor ist; dass eine angetriebene Welle (27) des Drehzahlminderers (41, 43) in einem Gehäuse (33) gehalten wird, das in einem Mantel (11A, 11B) befestigt ist, der einen mittleren Körper (11C) bildet, in dem der Motor (21) untergebracht ist, wobei sich ausgehend davon ein hohler Teil (11D) erstreckt, der das Rohr (3) auf der Seite des Motors hält; und dass sich ein Handgriff (13), der durch den Mantel (11A, 11B) gebildet wird, ausgehend vom mittleren Körper (11C) erstreckt und mit dem hohlen Teil (11D) verbunden ist.

2. Vorrichtung nach Anspruch 1, **dadurch gekennzeichnet, dass** ein Halter (15) mit dem Handgriff (13) verbunden ist.

3. Vorrichtung nach Anspruch 2, **dadurch gekennzeichnet, dass** der Halter eine Winkelposition einnimmt, die in Bezug auf den Handgriff einstellbar ist.

4. Vorrichtung nach Anspruch 1 oder 2 oder 3, **dadurch gekennzeichnet, dass** sich das Rohr (3) auf der Seite des Motors erstreckt.

5. Vorrichtung nach einem der vorhergehenden Ansprüche, **dadurch gekennzeichnet, dass** das Gehäuse (33) einen Sitz (35) aufweist, um das erste Ende des Rohrs (3) aufzunehmen.

6. Vorrichtung nach einem der vorhergehenden Ansprüche, **dadurch gekennzeichnet, dass** das Gehäuse aus einem Stück mit einer Halterung (23) gefertigt ist, die mit dem Motor (21) verbunden ist.

7. Vorrichtung nach Anspruch 6, **dadurch gekennzeichnet, dass** die Halterung (23) und/oder der Motor im Presssitz in dem Mantel (11A, 11B), der den Motor (21) enthält, angeordnet sind.

8. Vorrichtung nach Anspruch 6 oder 7, **dadurch gekennzeichnet, dass** die Halterung eine Durchgangsbohrung (23C) für die Antriebswelle (39) aufweist.

9. Vorrichtung nach Anspruch 6, 7 oder 8, **dadurch gekennzeichnet, dass** die Halterung (23) Tragarme (23B) zum Ergreifen des Motors umfasst, die sich ausgehend von einer Basis (23A) erstrecken, mit der das Gehäuse (33) einstückig gebildet ist.

10. Vorrichtung nach einem der vorhergehenden Ansprüche, **dadurch gekennzeichnet, dass** der Mantel (11A, 11B) eine Riffelung (11E) umfasst, die das Gehäuse (33) an seinem Platz hält.

11. Vorrichtung nach einem der vorhergehenden Ansprüche, **dadurch gekennzeichnet, dass** der Mantel (11A, 11B) eine Riffelung (11F) umfasst, die sich an einer Position an der Seite des Motors (21) in Eingriff mit dem Rohr (3) befindet.

## Revendications

1. Dispositif pour faire fonctionner un ustensile, comprenant : une unité (11) avec un moteur (21) possédant un arbre d'entraînement (39) ; un tube de support creux (3), avec une première extrémité reliée à ladite unité (11) et une seconde extrémité, à laquelle est associé un moyen de liaison pour ledit ustensile (7) ; un élément de transmission (25) s'étendant le long dudit tube (3) vers ledit moyen de liaison ; dans lequel ledit arbre d'entraînement (39) fait face au côté opposé par rapport à ladite seconde extrémité du tube (3) ; dans lequel un engrenage réducteur (41, 43) est disposé entre ledit arbre d'entraînement (39) et l'élément de transmission (25) ; dans lequel ledit élément de transmission s'étend sur le côté du moteur (21) ; **caractérisé en ce que** ledit moteur est un moteur électrique ; un arbre entraîné (27) dudit engrenage réducteur (41, 43) est supporté dans un logement (33) fixé dans une enveloppe (11A, 11B) formant un corps central (11C), dans lequel le moteur (21) est logé, à partir duquel une partie creuse (11D) s'étend, qui retient ledit tube (3) sur le côté dudit moteur ; et une partie de préhension (13) formée par ladite enveloppe (11A, 11B) s'étend à partir dudit corps central (11C) et se relie à ladite partie creuse (11D).

2. Dispositif selon la revendication 1, **caractérisé en ce qu'**une poignée (15) est reliée à ladite partie de préhension (13).

3. Dispositif selon la revendication 2, **caractérisé en ce que** ladite poignée possède une position angulaire qui est réglable par rapport à ladite partie de préhension.

4. Dispositif selon la revendication 1 ou 2 ou 3, **caractérisé en ce que** le tube (3) s'étend sur le côté du moteur.

5. Dispositif selon l'une quelconque des revendications précédentes, **caractérisé en ce que** ledit logement (33) comporte un siège (35) destiné à recevoir la première extrémité du tube (3).

6. Dispositif selon l'une quelconque des revendications précédentes, **caractérisé en ce que** ledit logement est fabriqué de façon monobloc avec un support (23) relié audit moteur (21).

7. Dispositif selon la revendication 6, **caractérisé en ce que** ledit support (23) et/ou ledit moteur sont ajustés avec serrage dans ladite enveloppe (11A, 11B) contenant le moteur (21).

8. Dispositif selon la revendication 6 ou 7, **caractérisé en ce que** ledit support comporte un trou de passage (23C) pour l'arbre d'entraînement (39).

9. Dispositif selon la revendication 6, 7 ou 8, **caractérisé en ce que** ledit support (23) comporte des appuis (23B) destinés à entrer en prise avec le moteur, s'étendant à partir d'une base (23A) avec laquelle ledit logement (33) est intégré.

10. Dispositif selon l'une quelconque des revendications précédentes, **caractérisé en ce que** ladite enveloppe (11A, 11B) comporte un nervurage (11E) qui retient ledit logement (33) en place.

11. Dispositif selon l'une quelconque des revendications précédentes, **caractérisé en ce que** ladite enveloppe (11A, 11B) comporte un nervurage (11F) qui entre en prise avec ledit tube (3) dans une position sur le côté dudit moteur (21).
